(19) Europäisches Patentamt
European Patent Office
Office européen des brevets

(11) **EP 4 170 562 A1**

(12) **EUROPEAN PATENT APPLICATION**

(43) Date of publication:
**26.04.2023 Bulletin 2023/17**

(21) Application number: **21206321.8**

(22) Date of filing: **03.11.2021**

(51) International Patent Classification (IPC):
***G06N 20/20*** *(2019.01)*

(52) Cooperative Patent Classification (CPC):
**G06N 20/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.10.2021 US 202163257243 P**

(71) Applicant: **Koninklijke Philips N.V.**
**5656 AG Eindhoven (NL)**

(72) Inventor: **CONROY, Bryan**
**Eindhoven (NL)**

(74) Representative: **Philips Intellectual Property & Standards**
**High Tech Campus 52**
**5656 AG Eindhoven (NL)**

(54) **DETERMINING A MEASURE OF SUBJECT SIMILARITY**

(57)    A mechanism for determining a measure or other indicator of similarity between two subjects or patients. In a training procedure, a machine-learning method is trained to perform a predictive clinical function that processes subject data in order to generate some output data (indicating a predicted output of a clinical task). Training representation data is obtained for each subject, representing the change in the predictive capability of the machine-learning method (for each subject) over the training procedure. The training representation data for each subject is then processed to predict a similarity between the different subjects.

FIG. 2

**Description**

FIELD OF THE INVENTION

The present invention relates to the field of healthcare subject analysis, and in particular, to the determination of a similarity between different subjects.

BACKGROUND OF THE INVENTION

In the field of healthcare, there is an increasing interest in assessing a similarity between different subjects or patients. Identifying similar subjects provides useful clinical information for assessing or treating a subject, as (for a current subject) the actions, outcomes and pathologies of similar subjects would provide useful information for assessing/treating the current subject.

A wide variety of techniques for comparing a similarity between subjects are known, and often identify a similarity between subjects based on shared or similar information. Known techniques for identifying a similarity includes clustering techniques, ranking similar subjects retrieved from a retrospective database to a particular subject of interest, and identifying relevant treatment/outcome statistics from a personalized cohort of subjects.

One important challenge of these techniques is the difficulty in defining what makes subjects similar to one another, since it can be ambiguous and dependent on use case and context. Often, a similarity is defined based on a fixed metric (e.g., squared Euclidean distance between feature vectors) or a parametric model is used to maximize some clustering objective (e.g., pairwise linking constraints).

It is herein recognized that one problem with such techniques is that fixed metrics often have limited applicability because they are not optimized to a specific use case scenario, and acquiring sufficient labeled data to train a parametric model can be costly.

There is therefore an ongoing desire to provide alternative and/or improved techniques for assessing a similarity between different subjects.

SUMMARY OF THE INVENTION

The invention is defined by the claims.

According to examples in accordance with an aspect of the invention, there is provided a computer-implemented method of determining a measure of similarity between a first subject and a second subject.

The computer-implemented method comprises: defining a machine-learning method, configured to perform a predetermined clinical predictive function, wherein the machine-learning method is trained using a training procedure and processes input data representing one or more features of a subject; obtaining first training representation data representing an evolution of the predictive capability of the machine-learning method, with respect to first input data representing subject data of the first subject, over the training procedure; obtaining second training representation data representing an evolution of the predictive capability of the machine-learning method, with respect to second input data representing subject data of the second subject, over the training procedure; and determining the measure of similarity by processing the first training representation data and the second training representation data.

This proposed invention takes a new approach to defining subject similarity. It assumes there is a pre-defined (clinical) problem to be addressed, such as early identification of episodes of patient deterioration, which can be framed as a predetermined clinical predictive function performed by a machine-learning method. One example of such a clinical predictive function may be a function for predicting the occurrence of episodes of hemodynamic instability in a subject, which can be framed as a classification problem in machine-learning. The machine-learning methods are trainable using well-defined supervised learning training algorithms (e.g., in the case of classification, logistic regression and boosting are standard techniques).

Embodiments propose to derive a measure of similarity between two subjects based on how similarly the machine-learning method classifies the two subjects over the entire course of its training, i.e. based on the evolution of the machine-learning method(s) throughout their respective training procedures. An important advantage of this approach is that the measure of similarity is directly linked to a clinical predictive function (which has clinical value). The measure of similarity can thereby be used to provide useful information for contextualizing and interpreting any predictions made by the machine learning algorithm(s).

In some examples, the first training representation data defines a change in the output of the machine-learning method processing the first input data, with respect to a time-dependent variable; and the second training representation data defines a change the output of the machine-learning method processing the second input data, with respect to the time-dependent variable, wherein the time-dependent variable changes during the course of the training procedure. Thus, each training representation data may contain a longitudinal representation of the change in the model output over the course of training.

In some embodiments, the first training representation data comprises a first sequence of values, wherein each value represents a change in the output of the machine-learning method processing the first input data divided by a change in the time-dependent variable for that output; and the second training representation data comprises a second sequence of values, wherein each value represents a change in the output of the machine-learning method processing the second input data divided by a change in the time-dependent variable for that output.

Optionally, the step of determining a measure of similarity comprises determining a dot product of the first sequence of values and the second sequence of values. Another approach, for improved similarity detection, may be to determine a measure of similarity by determining a cross-correlation between the first sequence of values and the second sequence of values.

In some embodiments, the training procedure comprises training the machine-learning method using a regularization-based procedure, making use of a regularization parameter.

In some examples, each value in the first sequence of values represents a change in the output of the machine learning method, processing the first input data, divided by a change in the regularization parameter; and each value in second first sequence of values represents a change in the output of the machine learning method, processing the second input data, divided by a change in the second regularization parameter.

In this way, the regularization parameter(s) act as the time-dependent variable. It is recognized that larger values of the regularization parameter result in "simpler" machine-learning methods. Thus, it is possible for the regularization to act as a time-dependent variable.

In some examples, the training procedure comprises training the machine-learning method using a boosting algorithmic approach, comprising a number of boosting rounds.

In at least one embodiment, the first training representation data comprises a first sequence of output values of the machine-learning method, each output value representing an output of the machine-learning method, processing the first input data, after a different number of boosting rounds; and the second training representation data comprises a second sequence of output values of the machine-learning method, each output value representing an output of the machine-learning method, processing the second input data after a different number of boosting rounds.

The step of determining a measure of similarity may comprise determining the dot product of the first and second sequence of output values. Another approach, for improved similarity detection, may be to determine a measure of similarity by determining a cross-correlation between the first sequence of values and the second sequence of values.

In some examples, the predetermined clinical predictive function comprises determining a predicted classification of a pathology for the subject.

There is also proposed a computer program product comprising computer program code means which, when executed on a computing device having a processing system, cause the processing system to perform all of the steps of any herein described (computer-implemented) method.

There is also proposed a processing system configured to determine a measure of similarity between a first subject and a second subject. The processing system is also configured to: define a machine-learning method, configured to perform a predetermined clinical predictive function, wherein the machine-learning method is trained using a training procedure and processes input data representing one or more features of a subject; obtain first training representation data representing an evolution of the predictive capability of the machine-learning method, with respect to first input data representing subject data of the first subject, over the training procedure; obtain second training representation data representing an evolution of the predictive capability of the machine-learning method, with respect to second input data representing subject data of the second subject, over the training procedure; and determine the measure of similarity by processing the first training representation data and the second training representation data.

The processing system may be configured to perform any herein described method, and vice versa.

For instance, in some examples, the first training representation data defines a change in the output of the machine-learning method processing the first input data, with respect to a time-dependent variable; and the second training representation data defines a change the output of the machine-learning method processing the second input data, with respect to the time-dependent variable, wherein the time-dependent variable changes during the course of the training procedure.

In some embodiments, the first training representation data comprises a first sequence of values, wherein each value represents a change in the output of the machine-learning method processing the first input data divided by a change in the time-dependent variable for that output; and the second training representation data comprises a second sequence of values, wherein each value represents a change in the output of the machine-learning method processing the second input data divided by a change in the time-dependent variable for that output.

The predetermined clinical predictive function may comprise determining a predicted classification of a pathology for the subject.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 is a flowchart illustrating a method according to an embodiment; and
Figure 2 illustrates a processing system according to an embodiment.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for determining a measure or other indicator of similarity between two subjects or patients. In a training procedure, a machine-learning method is trained to perform a predictive clinical function that processes subject data in order to generate some output data (indicating a predicted output of a clinical task). Training representation data is obtained for each subject, representing the change in the predictive capability of the machine-learning method (for each subject) over the training procedure. The training representation data for each subject is then processed to predict a similarity between the different subjects.

Embodiments rely upon a recognition that the predictive capability or predictive output of a machine-learning method for similar patients will be similar over the course of training. Thus, the more similar patients are to one another, the more similar the predictive capability of the machine-learning method (when processing appropriate input data for each subject/patient) will be throughout the course of its training.

In particular, the proposed approach derives the similarity between two patients based on how similarly a machine-learning model produces output data (e.g. classifies) the two patients over the entire course of model training.

Embodiments may be employed in any suitable system that would benefit from identifying similarities between different patients, e.g. training systems, classification systems or the like.

In the context of the present invention, a "subject" is considered to be an individual (e.g. mammal) in a clinical environment or under clinical observation (e.g. being monitored for clinical purposes in a home environment). As such, the term "subject" is considered to be interchangeable with the term "patient".

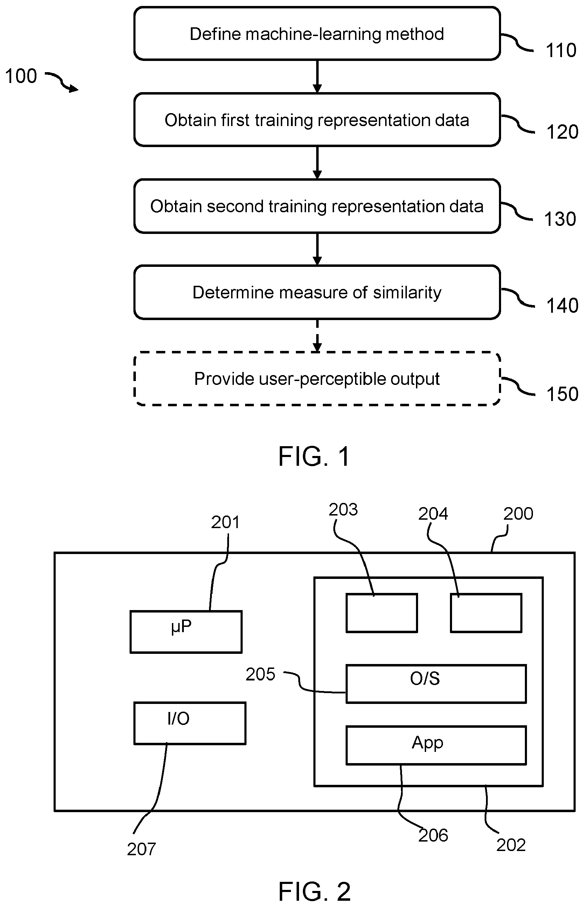

Figure 1 illustrates a method 100 according to an embodiment. The method is performed by a processing system or computer, and is therefore a computer-implemented method.

The method comprises a step 110 of defining a machine-learning method, configured to perform a predetermined clinical predictive function, wherein the machine-learning method is trained using a training procedure and processes input data representing one or more features of a subject.

Step 110 may comprise actively performing the training of the machine-learning method, or may comprise simply obtaining a definition of the machine-learning method (and, as later described, its characterization during training).

Thus, there is a pre-defined or predetermined machine-learning method, e.g. a supervised learning problem that represents a clinical decision support problem such as early identification of patient deterioration. The predetermined clinical predictive function may, for instance, be a classification function (e.g. to predict whether or not a subject exhibits a particular disease and/or pathology). As another example, the predetermined clinical predictive function may be to generate a predicted measure of a medical parameter (e.g. predict blood pressure or another vital sign from other measured medical data of the subject). These examples are non-exhaustive, and the skilled person would readily appreciate that any machine-learning method suitable for performing a desired clinical task could be used.

The method further comprises a step 120 of obtaining first training representation data representing an evolution of the predictive capability of the machine-learning method, with respect to first input data representing subject data of the first subject, over the training procedure. The method 100 also comprises a step 130 of obtaining second training representation data representing an evolution of the predictive capability of the machine-learning method, with respect to second input data representing subject data of the second subject, over the training procedure.

Thus, the method 100 obtains in step 120 and 130 data representing the change in the predictive capability, e.g. the predictive output, of the machine-learning method for first and second input data over the course of the training procedure.

It will be appreciated how the output provided by a machine-learning method (processing particular input data) will change as the machine-learning method is trained, i.e. over the course of the training procedure. Similarities between how the outputs (associated with different instances of input data) change represent a similarity between the patients associated with the different instances of input data. This property means that a measure of similarity can be determined from monitoring how the outputs change, so that such a measure of similarity is advantageously directed towards a particular clinical predictive task.

In specific examples, the training representation data defines a change in the output of the machine learning method with respect to a time-dependent variable. Thus, first training representation data defines a change of the output of the machine-learning method (processing the first input data) with respect to a time-dependent variable; and second training representation data defines a change of the output of the machine-learning method (processing the second input data) with respect to a time-dependent variable.

Formulated mathematically, let t denote a measure of "training time" (i.e. a time-dependent variable) for training a machine-learning method f (representing a predetermined clinical predictive function), with t=0 at the start of training and t=T at the conclusion of training. Here, "training time" can refer to any measure or variable that changes (e.g. increases) over the course of the training procedure. The "training time" may therefore differ depending on the specifics of the machine-learning method and/or training procedure used. For instance, it could refer to the iterative steps taken to solve an optimization problem, the regularization path taken over a hyperparameter, or the round number in boosting algorithms.

It is assumed that the machine-learning model f(.) can be parameterized by a vector $\theta(t)$, which evolves over the course of training and is therefore a function of "training time" t. Given input data x (corresponding to the features of a given patient), it is possible to calculate a "training time-series" z(x,t), which represents an example of training representation data, as follows:

$$z(x,t) = \frac{\partial f(x; \theta(t))}{\partial t} \qquad (1)$$

Intuitively, this representation data z(x,t) captures the rate of change of the model output (processing particular input data x) over the course of the training procedure (i.e. as the training time t changes. Very often, models are initialized from a very simple model at start of training (t=0) and increase in complexity as training time increases. This representation, therefore, then captures how the prediction for a pattern x evolves as the model complexity increases.

The first training representation data z(xi,t) for the first subject may be calculated using equation (1), and using first input data $x_1$ for the input data x. The first input data $x_1$ contains input data for the first subject. The second training representation data z($x_2$, t) for the second subject may be calculated using equation (1), and using second input data $x_2$ for the input data x. The second input data $x_2$ contains input data for the second subject. Input data represents features (e.g. medical information, personal information, family information and so on) of a particular subject.

More generally, this shows how the first training representation data may comprise a first sequence of values, wherein each value represents a change in the output of the machine-learning method (processing the first input data) divided by a change in the time-dependent variable for that output; and the second training representation data may comprise a second sequence of values, wherein each value represents a change in the output of the machine-learning method (processing the first input data) divided by a change in the time-dependent variable for that output.

The length of the first and second sequence of values is identical, as they simply represent how the output of a machine-learning method differs at different points in time (i.e. different values of a time-dependent variable).

The method 100 then comprises a step 140 of determining the measure of similarity by processing the first training representation data and the second training representation data.

In one example, to compute the similarity S($x_1$,$x_2$) between two instances of input data $x_1$ and $x_2$ (corresponding to two different subjects/patients), the dot product between their "training time-series" is calculated, as follows:

$$S(x_1, x_2) = \langle z(x_1, t), z(x_2, t) \rangle \qquad (2)$$

An alternative to equation (2) is to calculate a cross-correlation between the training representation data (training time-series) of the first and second subjects. This approach may provide a more accurate mechanism for determining a similarity between the first and second subjects. Other measures of similarity between two time-series of data could be used instead, and would be readily apparent to the skilled person.

Two subjects can thereby be deemed similar if their predictive models respond similarly over the course of training. In this way, a similarity between how (as it is trained) a machine-learning model generates a prediction for a first and second subject indicates a similarity between the two subjects.

The method 100 may further comprise a step 150 of providing, at a user interface, a user-perceptible output (e.g. an audio or visual output) of the predicted measure of similarity. In other examples, the measure of similarity is supplied to a further processing system and/or memory (for later processing). Measures of similarity can prove useful in the analysis of subjects, for instance, to identify risks, recommended actions and solutions for a clinical concern or pathology based on past data of similar subjects to a current subject.

Two specific working examples are hereafter provided in the context of standard or known training mechanisms for a machine-learning method.

A first working example is a regularized training setup in which the parameter vector θ of the predictive model f is computed by optimizing a regularized objective:

$$\theta(\lambda) = \arg\min_{\lambda} \ell(\theta) + \lambda R(\theta) \tag{3}$$

Here, the regularization parameter λ trades off a data-fitting objective with a regularization term. Larger values of λ result in "simpler" models. The value of λ is thereby able to function as the role of "training time". Thus, in this example, the training procedure comprises training the machine-learning method using a regularization-based procedure, making use of a regularization parameter.

Use of the regularization training setup means that input data x can be associated with training representation data:

$$z(x,\lambda) = \frac{\partial f(x; \theta(\lambda))}{\partial \lambda} \tag{4}$$

Equation (4) captures the evolution of the machine-learning model as the regularization parameter sweeps through model complexity. The above derivative can be calculated using standard variational calculus.

In this way, each value in the first sequence of values represents a change in the output of the machine learning method, processing the first input data, divided by a change in the regularization parameter; and each value in second first sequence of values represents a change in the output of the machine learning method, processing the second input data, divided by a change in the second regularization parameter.

Equation (2) can then be used in combination with equation (4), i.e. where equation (4) represents z(x, t) where t = λ, to calculate the similarity between the first and second subject.

In a second working example, the machine-learning method is trained using boosting algorithms. This effectively means that the "training time" variable for this embodiment is discrete. In other words, the number of the boosting round (i.e. how many boosting rounds has the machine-learning method been subject to) functions as the "training time". On boosting round $t=t_j$, the predictive model output is an ensemble of weak learners:

$$f(x, t_j) = \sum_{t=0}^{t_j} \alpha_t h_t(x) \tag{5}$$

In this way, the first training representation data comprises a first sequence of output values of the machine-learning method, each output value representing an output of the machine-learning method, processing the first input data, after a different number of boosting rounds; and the second training representation data comprises a second sequence of output values of the machine-learning method, each output value representing an output of the machine-learning method, processing the second input data after a different number of boosting rounds.

In this scenario, as t is discrete, it is possible to replace the derivative (e.g. as used in equation (1) or (4)) with a finite differencing. This means that a measure of similarity $S(x_1, x_2)$ between two subjects (represented by input data $x_1$ and $x_2$ respectively) can be calculated as:

$$S(x_1, x_2) = \sum_{t=0}^{T} \alpha_t^2 h_t(x_1) h_t(x_2) \tag{6}$$

This is effectively the dot product of the first and second sequences of output values. Thus, the two instances of input data (and therefore the two subjects) are deemed similar based on their (weighted) correlation across the weak learners in the ensemble. In the case that the weak learners are binary valued (h(x) = +1 or -1), then the similarity calculates the weighted agreement amongst the weak learners.

Of course, other approaches for calculating a measure of similarity could be used instead of equation (6), such as a cross-correlation function or the like.

Previous embodiments disclose approaches for determining a measure of similarity between a first and second subject. It will be appreciated how approaches could be expanded (e.g. repeated multiple times) to determine multiple measures of similarity between any number of subjects.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

By way of further example, Figure 2 illustrates an example of a processing system 200 within which one or more parts of an embodiment may be employed. Various operations discussed above may utilize the capabilities of the processing system 200. For example, one or more parts of a system for processing an image with a CNN may be incorporated in any element, module, application, and/or component discussed herein. In this regard, it is to be understood that system functional blocks can run on a single computer or may be distributed over several computers and locations (e.g. connected via internet).

The processing system 200 includes, but is not limited to, PCs, workstations, laptops, PDAs, palm devices, servers, storages, and the like. Generally, in terms of hardware architecture, the processing system 200 may include one or more processors 201, memory 202, and one or more I/O devices 207 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 201 is a hardware device for executing software that can be stored in the memory 202. The processor 201 can be virtually any custom made or commercially available processor, a central processing unit (CPU), a digital signal processor (DSP), or an auxiliary processor among several processors associated with the processing system 200, and the processor 201 may be a semiconductor based microprocessor (in the form of a microchip) or a microprocessor.

The memory 202 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 202 may incorporate electronic, magnetic, optical, and/or other types of storage media. Note that the memory 202 can have a distributed architecture, where various components are situated remote from one another, but can be accessed by the processor 201.

The software in the memory 202 may include one or more separate programs, each of which comprises an ordered listing of executable instructions for implementing logical functions. The software in the memory 202 includes a suitable operating system (O/S) 205, compiler 204, source code 203, and one or more applications 206 in accordance with exemplary embodiments. As illustrated, the application 206 comprises numerous functional components for implementing the features and operations of the exemplary embodiments. The application 206 of the processing system 200 may represent various applications, computational units, logic, functional units, processes, operations, virtual entities, and/or modules in accordance with exemplary embodiments, but the application 206 is not meant to be a limitation.

The operating system 205 controls the execution of other computer programs, and provides scheduling, input-output control, file and data management, memory management, and communication control and related services. It is contemplated by the inventors that the application 206 for implementing exemplary embodiments may be applicable on all commercially available operating systems.

Application 206 may be a source program, executable program (object code), script, or any other entity comprising a set of instructions to be performed. When a source program, then the program is usually translated via a compiler (such as the compiler 204), assembler, interpreter, or the like, which may or may not be included within the memory 202, so as to operate properly in connection with the O/S 205. Furthermore, the application 206 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 207 may include input devices such as, for example but not limited to, a mouse, keyboard, scanner, microphone, camera, etc. Furthermore, the I/O devices 207 may also include output devices, for example but not limited to a printer, display, etc. Finally, the I/O devices 207 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 207 also include components for communicating over various networks, such as the Internet or intranet.

If the processing system 200 is a PC, workstation, intelligent device or the like, the software in the memory 202 may further include a basic input output system (BIOS) (omitted for simplicity). The BIOS is a set of essential software routines that initialize and test hardware at startup, start the O/S 205, and support the transfer of data among the hardware devices. The BIOS is stored in some type of read-only-memory, such as ROM, PROM, EPROM, EEPROM or the like, so that the BIOS can be executed when the processing system 200 is activated.

When the processing system 200 is in operation, the processor 201 is configured to execute software stored within the memory 202, to communicate data to and from the memory 202, and to generally control operations of the processing system 200 pursuant to the software. The application 206 and the O/S 205 are read, in whole or in part, by the processor 201, perhaps buffered within the processor 201, and then executed.

When the application 206 is implemented in software it should be noted that the application 206 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 206 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Embodiments make use of a machine-learning method. A machine-learning method is any self-training algorithm that processes input data in order to produce or predict output data. Here, the input data comprises subject data of a subject and/or first values of the one or more sleep parameters and the output data comprises a predictive output of a clinical function (e.g. a classification of pathology or the like).

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A computer-implemented method (100) of determining a measure of similarity between a first subject and a second subject, the computer-implemented method comprising:

    defining (110) a machine-learning method, configured to perform a predetermined clinical predictive function, wherein the machine-learning method is trained using a training procedure and processes input data representing one or more features of a subject;
    obtaining (120) first training representation data representing an evolution of the predictive capability of the machine-learning method, with respect to first input data representing subject data of the first subject, over the training procedure;
    obtaining (130) second training representation data representing an evolution of the predictive capability of the machine-learning method, with respect to second input data representing subject data of the second subject, over the training procedure; and
    determining (140) the measure of similarity by processing the first training representation data and the second training representation data.

2. The computer-implemented method of claim 1, wherein:

    the first training representation data defines a change in the output of the machine-learning method processing the first input data, with respect to a time-dependent variable; and
    the second training representation data defines a change the output of the machine-learning method processing the second input data, with respect to the time-dependent variable,
    wherein the time-dependent variable changes during the course of the training procedure.

3. The computer-implemented method of claim 2, wherein:

    the first training representation data comprises a first sequence of values, wherein each value represents a change in the output of the machine-learning method processing the first input data divided by a change in the time-dependent variable for that output; and
    the second training representation data comprises a second sequence of values, wherein each value represents a change in the output of the machine-learning method processing the second input data divided by a change in the time-dependent variable for that output.

4. The computer-implemented method of claim 3, wherein the step of determining a measure of similarity comprises determining a dot product of the first sequence of values and the second sequence of values.

5. The computer-implemented method of any of claims 1 to 4, wherein the training procedure comprises training the machine-learning method using a regularization-based procedure, making use of a regularization parameter.

6. The computer-implemented method of claim 5, when dependent upon claim 3 or 4, wherein:

    each value in the first sequence of values represents a change in the output of the machine learning method, processing the first input data, divided by a change in the regularization parameter; and

each value in second first sequence of values represents a change in the output of the machine learning method, processing the second input data, divided by a change in the second regularization parameter.

**7.** The computer-implemented method of claim 1, wherein:

the training procedure comprises training the machine-learning method using a boosting algorithmic approach, comprising a number of boosting rounds.

**8.** The computer-implemented method of claim 7, wherein:

the first training representation data comprises a first sequence of output values of the machine-learning method, each output value representing an output of the machine-learning method, processing the first input data, after a different number of boosting rounds; and
the second training representation data comprises a second sequence of output values of the machine-learning method, each output value representing an output of the machine-learning method, processing the second input data after a different number of boosting rounds.

**9.** The computer-implemented method of claim 8, wherein the step of determining a measure of similarity comprises determining the dot product of the first and second sequence of output values.

**10.** The computer-implemented method of any of claims 1 to 9, wherein the predetermined clinical predictive function comprises determining a predicted classification of a pathology for the subject.

**11.** A computer program product comprising computer program code means which, when executed on a computing device having a processing system, cause the processing system to perform all of the steps of the method according to any of claims 1 to 10.

**12.** A processing system (200) configured to determine a measure of similarity between a first subject and a second subject, wherein the processing system is configured to:

define (110) a machine-learning method, configured to perform a predetermined clinical predictive function, wherein the machine-learning method is trained using a training procedure and processes input data representing one or more features of a subject;
obtain (120) first training representation data representing an evolution of the predictive capability of the machine-learning method, with respect to first input data representing subject data of the first subject, over the training procedure;
obtain (130) second training representation data representing an evolution of the predictive capability of the machine-learning method, with respect to second input data representing subject data of the second subject, over the training procedure; and
determine (140) the measure of similarity by processing the first training representation data and the second training representation data.

**13.** The processing system of claim 12, wherein:

the first training representation data defines a change in the output of the machine-learning method processing the first input data, with respect to a time-dependent variable; and
the second training representation data defines a change the output of the machine-learning method processing the second input data, with respect to the time-dependent variable,

wherein the time-dependent variable changes during the course of the training procedure.

**14.** The processing system of claim 12 or 13, wherein:

the first training representation data comprises a first sequence of values, wherein each value represents a change in the output of the machine-learning method processing the first input data divided by a change in the time-dependent variable for that output; and
the second training representation data comprises a second sequence of values, wherein each value represents a change in the output of the machine-learning method processing the second input data divided by a change in the time-dependent variable for that output.

the second training representation data comprises a second sequence of values, wherein each value represents a change in the output of the machine-learning method processing the second input data divided by a change in the time-dependent variable for that output.

15. The processing system of claim 14, wherein the predetermined clinical predictive function comprises determining a predicted classification of a pathology for the subject.

```
┌─────────────────────────────────────────┐
│      Define machine-learning method      │ ～ 110
└─────────────────────────────────────────┘
                    │
                    ▼
┌─────────────────────────────────────────┐
│   Obtain first training representation   │ ～ 120
│                 data                     │
└─────────────────────────────────────────┘
                    │
                    ▼
┌─────────────────────────────────────────┐
│  Obtain second training representation   │ ～ 130
│                 data                     │
└─────────────────────────────────────────┘
                    │
                    ▼
┌─────────────────────────────────────────┐
│       Determine measure of similarity    │ ～ 140
└─────────────────────────────────────────┘
                    ┊
                    ▼
┌ ─ ─ ─ ─ ─ ─ ─ ─ ─ ─ ─ ─ ─ ─ ─ ─ ─ ─ ─ ─┐
│       Provide user-perceptible output    │ ～ 150
└ ─ ─ ─ ─ ─ ─ ─ ─ ─ ─ ─ ─ ─ ─ ─ ─ ─ ─ ─ ─┘
```

100

FIG. 1

FIG. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/058271 A1 (KONINKLIJKE PHILIPS NV [NL]) 26 March 2020 (2020-03-26) <br> * abstract; figures 1-3 * <br> * paragraph [0001] - paragraph [0021] * <br> * paragraph [0028] - paragraph [0064] * <br> ----- | 1-15 | INV. <br> G06N20/20 |
| A | CA 2 710 286 A1 (AVIIR INC [US]) 3 July 2008 (2008-07-03) <br> * abstract; figures 4-7,9-10 * <br> * paragraph [0001] - paragraph [0005] * <br> * paragraph [0145] - paragraph [0218] * <br> ----- | 1-15 | |
| A | KARMEN CHRISTIAN ET AL: "Methods for a similarity measure for clinical attributes based on survival data analysis", BMC MEDICAL INFORMATICS AND DECISION MAKING, [Online] vol. 19, no. 1, 21 October 2019 (2019-10-21), XP055914028, DOI: 10.1186/s12911-019-0917-6 Retrieved from the Internet: URL:https://bmcmedinformdecismak.biomedcentral.com/track/pdf/10.1186/s12911-019-0917-6.pdf> [retrieved on 2022-04-21] <br> * abstract; figures 1-4 * <br> * page 1, left-hand column, line 1 - page 8, right-hand column, last line * <br> ----- | 1-15 | TECHNICAL FIELDS SEARCHED (IPC) <br><br> G06N <br> G16H |
| A | TOM VIERING ET AL: "The Shape of Learning Curves: a Review", ARXIV.ORG, CORNELL UNIVERSITY LIBRARY, 201 OLIN LIBRARY CORNELL UNIVERSITY ITHACA, NY 14853, 19 March 2021 (2021-03-19), XP081913232, <br> * abstract * <br> * page 2, line 1 - page 9, line 7 * <br> * page 11, line 10 - page 17, line 10 * <br> * page 22, line 10 - page 32, last line * <br> ----- | 1-15 | |

The present search report has been drawn up for all claims

| Place of search | Date of completion of the search | Examiner |
|---|---|---|
| The Hague | 22 April 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 20 6321**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-04-2022**

| Patent document cited in search report | | Publication date | Patent family member(s) | | Publication date |
|---|---|---|---|---|---|
| WO 2020058271 | A1 | 26-03-2020 | US | 2022028565 A1 | 27-01-2022 |
| | | | WO | 2020058271 A1 | 26-03-2020 |
| CA 2710286 | A1 | 03-07-2008 | CA | 2710286 A1 | 03-07-2008 |
| | | | US | 2008300797 A1 | 04-12-2008 |
| | | | WO | 2008080126 A2 | 03-07-2008 |

EPO FORM P0459

For more details about this annex : see Official Journal of the European Patent Office, No. 12/82